# EUROPEAN PATENT SPECIFICATION

(11) **EP 2 405 406 B1**
(45) Date of publication and mention of the grant of the patent: **17.04.2013**
(21) Application number: 11170095.1
(22) Date of filing: 16.06.2011
(51) Int. Cl.: B60W 40/09, B60W 50/14, G07C 5/08, B60K 35/00

(54) **Information system for a vehicle**
Informationssystem für ein Fahrzeug
Système d'information pour véhicule

(30) Priority: 08.07.2010 SE 1050756
(43) Date of publication of application: 11.01.2012
(73) Proprietor: Scania CV AB, 151 87 Södertälje (SE)
(72) Inventor: Fagerberg, Kalle, 120 62 Stockholm (SE)

(56) References cited:
- WO-A1-03/022618
- WO-A1-2007/139493
- DE-A1- 19 723 922

## Description

### Field of the invention

The present invention relates to an information system for a vehicle, e.g. a bus, a truck or a passenger car, according to the preamble of the independent claim.

### Background to the invention

Information handling is an important aspect of traffic safety. A related difficult problem is how to detect a driver's ability to take in information.

There is now a large amount of information which can be displayed to a driver and the present invention indicates a way of setting aside less important information at certain predefined critical times.

In certain situations, a driver may need, and be able to take in, all of this information. At other times, the same driver may be stressed or distracted, in which case a large amount of information might have an adverse effect on him/her and thereby lead to traffic hazard situations.

The difficulty is therefore being able to detect when the driver is receptive to a large amount of information and when not.

US 2007/0124027 A1 refers to an information system according to the preamble of claim 1 for motor vehicles to provide information as a function of factors which affect the driver. Information is delivered as a function of factors which affect his/her workload, behaviour and personal characteristics which affect the driving of the vehicle. A large number of factors are used in order to be able to assess the driver's workload as accurately as possible. Activities catered for are steering activity and pedal use.

US 7,149,653 refers to an information system for a motor vehicle to feed information to the driver. The information concerned is generated and/or filtered as a function of the driver's state, e.g. degree of alertness, and his/her behaviour, e.g. steering and pedal use.

WO 2007/139493 refers to a device for determining a driver's anticipation with regard to his/her ability to handle a vehicle in a traffic situation. A score for the driver's anticipation is based inter alia on measurements of the time from when he/she releases the accelerator pedal to when the vehicle's braking commences. This time is compared with a reference value and the score is determined by the result of the comparison. A longer time results in a better score, representing better anticipation, than a shorter time.

The object of the present invention is to propose an improved information system for a vehicle driver with regard to traffic safety.

### Summary of the invention

The above object is achieved with the invention defined by the independent claim.

Preferred embodiments are defined by the dependent claims.

The invention thus comprises an information system for a vehicle provided with an evaluation device adapted to evaluating a vehicle driver's ability to drive the vehicle in an anticipatory way, and to generating an anticipation signal which contains information about the driver's degree of anticipation on the basis of one or more parameters related to his/her behaviour. The information system further comprises a presentation control unit adapted to influencing which category of driver information is to be presented to him/her via a presentation means in response to said anticipation signal.

The present invention is based on the inventor's insight that the degree of a driver's anticipation affects how safely he/she is able to drive the vehicle in traffic. Traffic safety is improved by determining the driver's anticipation and taking it into account in influencing the amount of information presented to him/her.

The driver's anticipation is graded by scoring his/her degree of anticipation according to predetermined criteria. The degree of anticipation is then used to control the level of information content with which it is appropriate to present to him/her.

The degree of anticipation is determined according to a first embodiment by the difference in time between use of acceleration and brake controls, e.g. accelerator pedal and brake pedal. An anticipatory driver releases the accelerator pedal some time before he/she begins to brake, whereas a less anticipatory driver releases the accelerator pedal relatively later.

According to a second embodiment, the degree of anticipation is determined by how the vehicle is accelerated and retarded. An anticipatory driver drives the vehicle in such a way that retardation is less than in the case of a less anticipatory driver.

In a vehicle's information system, all driver information is categorised in terms of what to present to the driver immediately, what to present after a time and what not to present at all. According to the present invention, the information system determines what to present according to the driver's degree of anticipation. If the driver has a high anticipation score, it is permissible to present a large amount of information, but if he/she has a low or rapidly declining score, only important information is presented.

The present invention contributes to greater safety in that only a limited amount of information is presented to the driver in a pressurised traffic situation. The driver is thus made aware of important information enabling him/her to act correctly in the pressurised situation and thereby reduce the risk of accidents.

### Brief description of drawings

Figure 1 is a schematic block diagram illustrating the present invention.
Figure 2 is a schematic block diagram illustrating the present invention according to a first preferred embodiment.
Figure 3 is a time diagram illustrating an aspect of the first embodiment.

### Detailed description of preferred embodiments of the invention

The invention is described below in more detail with reference to the drawings.

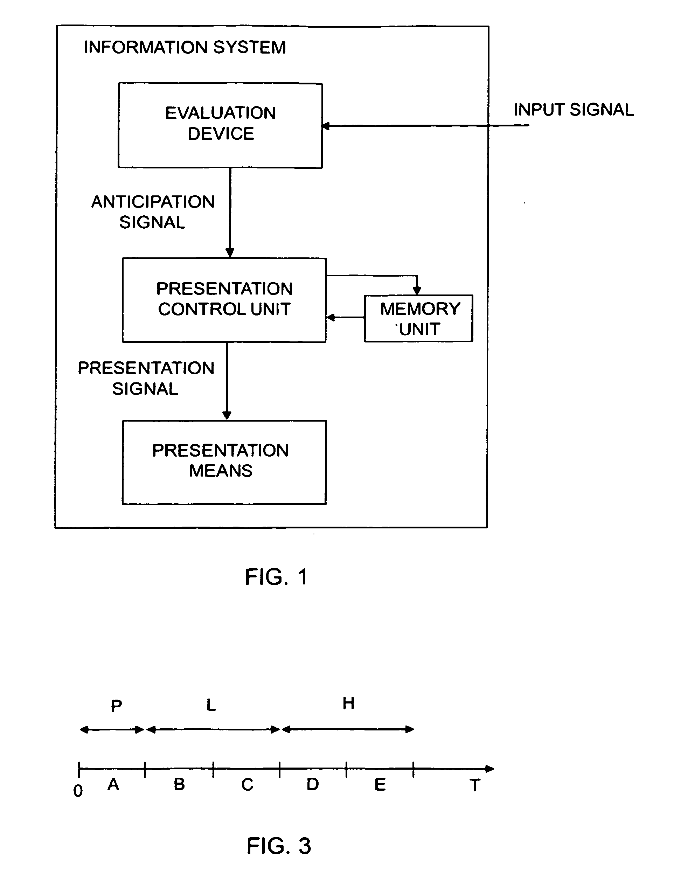

Figure 1 is a schematic block diagram illustrating the present invention, comprising an information system for a vehicle provided with an evaluation device adapted to evaluating a vehicle driver's ability to drive the vehicle in an anticipatory way. The evaluation device is adapted to generating an anticipation signal which contains information about the driver's degree of anticipation based on one or more parameters related to his/her behaviour.

The information system further comprises a presentation control unit adapted to influencing which category of driver information is to be presented to the driver via a presentation means in response to said anticipation signal. The driver information is preferably presented in the form of visual information on a display but may also be presented in acoustic form, e.g. in combination with information which appears on the display.

According to an embodiment of the present invention, the processing device comprises a memory unit in which the driver information is stored.

Vehicle information comprises at least two information categories which differ in relevance from a traffic safety perspective, viz. a first category comprising only information of very high priority, and a second category comprising not only information from the first category but also information which is of medium-high priority. The driver information preferably also comprises a third category covering not only information from the second category but also information which is of low priority from a traffic safety perspective.

The content of said information categories may for example be altered dynamically on the basis of historically presented driver information.

Preferably there is logging of how anticipatorily the driver drives. If for example high-priority information is presented very often, some form of indicating signal has to be generated, which may be a sign that the driver systematically does not drive anticipatorily, but may also be an indication that the system is incorrectly set.

According to a further alternative, the threshold values may be altered adaptively on the basis of predetermined threshold value criteria. For example, there may be logging of how the driver drives and in particular the time pattern of pedal use. By analysing these times and taking into account other parameters which may be available in the vehicle, e.g. vehicle speed, map data, engine speed and other driver-specific data, it is possible to arrive at an objective measure of which times may be regarded as relevant for stress-tolerant drivers (more anticipatory) and those who are not so stress-tolerant (less anticipatory).

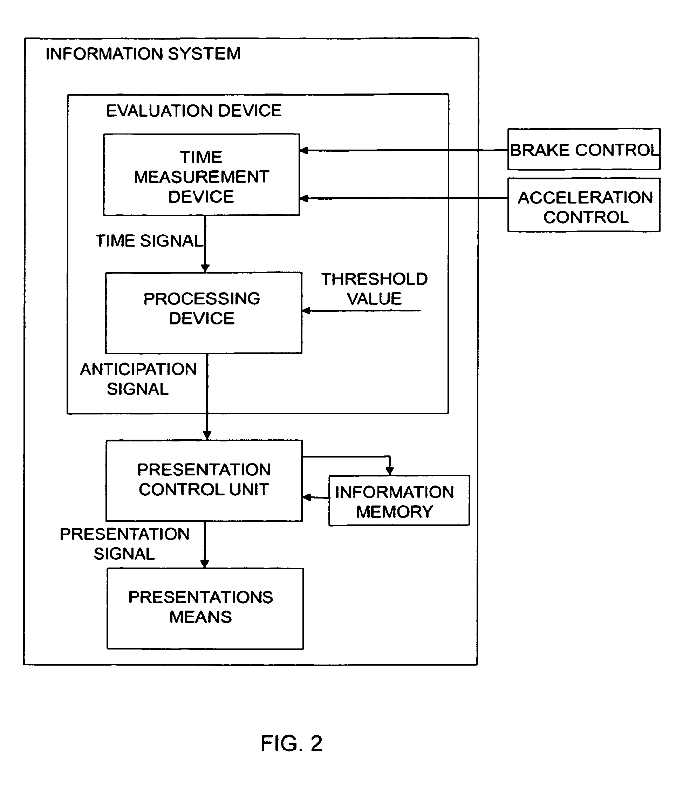

Figure 2 is a schematic block diagram illustrating the present invention according to a first preferred embodiment.

According to a first embodiment, the detection of the driver's anticipation is based on at least one parameter related to his/her use of the vehicle's acceleration and braking controls, e.g. accelerator pedal and brake pedal.

According to the first embodiment, the evaluation device comprises a processing device, an information memory and a time measurement device which is adapted to measuring at least one period of time related to the driver's use of the vehicle's acceleration and brake controls and to generating at least one time signal based thereon. The time signal is intended to be conveyed to the processing device which is adapted to comparing the measured period of time with one or more threshold values and to generating the anticipation signal on the basis of the comparison. The evaluation device may take the form of a dedicated processor or be an integrated part of the vehicle's control unit. Communication with other circuits in the vehicle is via its bus system.

The system comprises a first sensor adapted to detecting a first point in time when the driver releases the acceleration control, e.g. the accelerator pedal, and a second sensor adapted to detecting a second point in time when the driver begins to act upon the brake control, e.g. the brake pedal, and the time signal contains information about the difference between the first and second points in time.

The driver's anticipation is based according to this embodiment on the period of time from when he/she releases the accelerator pedal to when the brake pedal is acted upon. If this period is preferably within a first range of 20-50 ms, information which is in the first category is presented, i.e. the driver is assessed as not being anticipatory and as being able to take in only a limited amount of information. If the period is preferably within a second range of 50-200 ms, information which is in the second category is presented, i.e. the driver is assessed as being more anticipatory and therefore able to take in a larger amount of information. In the case of times exceeding 200 ms, information according to the third category is presented. The limits of these ranges are of course adjustable gradually, e.g. progressively as the system is adapted to the vehicle's driver.

Figure 3 is a time diagram illustrating an aspect of the first embodiment. It shows a time line divided into a number of periods A-E, where periods B and C denote times when the driver has a low degree of anticipation, these periods being marked L. Periods D and E denote times when the driver has a higher degree of anticipation, and are marked H. Measured times which fall within period A are treated as panic braking and are marked P.

According to this first embodiment, it is primarily the time between release of accelerator pedal and commencement of braking that indicates the degree of anticipation. It may sometimes also be advantageous to take historical data into account, e.g. any rapid changes in degree of anticipation. This may also affect which categories of information to present to the driver so that he/she is only provided with information from the first category, i.e. only absolutely necessary information.

According to a second embodiment, measurement of the driver's anticipation is based on the vehicle's acceleration, in which case the evaluation device receives an input signal from an accelerometer. A driver who drives the vehicle jerkily, i.e. with relatively high values in terms of speed increases and brakings, is assessed as being less anticipatory than one who drives with relatively lower values in terms of speed increases and brakings. The evaluation device does a comparison of the absolute value for acceleration with a number of threshold values. If for example the absolute value for acceleration is within a first range of 2-5 m/s², information which is in the first category is presented, but if the value is within a second range of 1-2 m/s², information which is in the second category is presented, and if the value is less than 1 m/s², information which is in the third category is presented. The limits of these ranges may preferably be set according to the vehicle's driver and may be altered progressively as the system is adapted to his/her driving style. These threshold values may of course also be altered, e.g. to cater for vehicle type, desired comfort level, etc.

With regard to panic braking, identified by retardation which occurs within the shortest time range or is greater than 5 m/s², the system should be set so that no information is filtered away if this takes place on individual occasions, but if it occurs more frequently then only information of very high priority should be presented to the driver.

The present invention is not confined to the preferred embodiments described above. Sundry alternatives, modifications and equivalents may be used. The above embodiments are therefore not to be regarded as limiting the invention's scope of protection defined by the attached claims.

## Claims

1. An information system for a vehicle comprising an evaluation device adapted to evaluating a vehicle driver's ability to drive the vehicle in an anticipatory way, and to generating an anticipation signal which contains information about the driver's degree of anticipation on the basis of one or more parameters related to his/her behaviour, which information system further comprises a presentation control unit adapted to influencing which category of driver information is to be presented to him/her via a presentation means in response to said anticipation signal, c h a r a c t e r i s e d in that at least one of said parameters is related to the driver's use of the vehicle's acceleration and brake controls, e.g. accelerator pedal and brake pedal, and said evaluation device comprises a processing device, an information memory and a time measurement device which is adapted to measuring at least one period of time related to the driver's use of the vehicle's acceleration and brake controls and to generating at least one time signal on the basis thereof, and that said time signal is intended to be conveyed to the processing device which is adapted to comparing the measured period of time with one or more threshold values and to generating said anticipation signal on the basis of the comparison.

2. An information system according to claim 1, in which said driver information comprises at least two information categories which differ in relevance from a traffic safety perspective, viz. a first category comprising only information which is of very high priority, and a second category which also comprises information which is of medium-high priority from a traffic safety perspective.

3. An information system according to claim 2, in which said driver information comprises a third category which also comprises information which is of low priority from a traffic safety perspective.

4. An information system according to claim 1, which system comprises a first sensor adapted to detecting a first point in time when the driver releases the accelerator pedal, and a second sensor adapted to detecting a second point in time when the driver begins to act upon the brake pedal, such that the time signal contains information about the difference between the first and second points in time.

5. An information system according to any one of claims 1-4, in which information in the first category is presented if the measured period of time in the time signal is within a first range of 20-50 ms, and information in the second category is presented if the time period is within a second range of 50-200 ms.

6. An information system according to any one of claims 1-3, in which at least one parameter is related to the vehicle's acceleration.

7. An information system according to claim 6, in which said evaluation device is adapted to receiving an input signal from an accelerometer.

8. An information system according to claim 6 or 7, in which information in the first category is presented if the absolute value for the acceleration is within a first range of 2-5 m/s², information in the second category is presented if the value is within a second range of 1-2 m/s², and information in the third category is presented if the value is less than 1 m/s²_{.}

9. An information system according to any one of the foregoing claims, in which the processing device comprises a memory unit in which the driver information is stored.

## Patentansprüche

1. Informationssystem für ein Fahrzeug, umfassend eine Auswertevorrichtung, die dazu ausgestaltet ist, um die Fähigkeit eines Fahrzeugführers, das Fahrzeug auf voraussehende Weise zu fahren, auszuwerten und ein Voraussichtigkeitssignal zu erzeugen, welches Informationen über den Grad des Vorraussehens des Fahrers auf der Basis von einem oder mehreren, auf sein Verhalten bezogenen Parametern enthält, wobei das Informationssystem weiterhin eine Präsentationskontrolleinheit umfasst, die dazu ausgestaltet ist, um zu beeinflussen, welche Kategorie von Fahrerinformationen ihm anhand eines Präsentationsmittels als Antwort auf das besagte Voraussichtigkeitssignal präsentiert werden soll,
**dadurch gekennzeichnet, dass** mindestens einer der Parameter auf die Verwendung der Beschleunigungs- und Bremskontrollen des Fahrzeugs, z. B. Gaspedal und Bremspedal, durch den Fahrer bezogen ist und die Auswertevorrichtung eine Verarbeitungsvorrichtung, einen Informationsspeicher und eine Zeitmessvorrichtung aufweist, welche dazu ausgestaltet ist, um mindestens eine Zeitperiode, die auf die Verwendung der Beschleunigungs- und Bremskontrollen des Fahrzeugs durch den Fahrer bezogen ist, zu messen und auf der Basis davon mindestens ein Zeitsignal zu erzeugen, und dass beabsichtigt wird, das Zeitsignal der Verarbeitungsvorrichtung zu übermitteln, die dazu ausgestaltet ist, um die gemessene Zeitperiode mit einem oder mehreren Schwellenwerten zu vergleichen und das Voraussichtigkeitssignal auf der Basis des Vergleiches zu erzeugen.

2. Informationssystem nach Anspruch 1, in dem die Fahrerinformationen mindestens zwei Informationskategorien umfassen, welche sich anhand ihrer Relevanz aus Sicht der Verkehrssicherheit unterscheiden, nämlich einer ersten Kategorie, umfassend nur Informationen, welche von sehr hoher Priorität sind, und einer zweiten Kategorie, welche auch Informationen umfasst, die von mittelhoher Priorität aus Sicht der Verkehrssicherheit sind.

3. Informationssystem nach Anspruch 2, in dem die besagten Fahrerinformationen eine dritte Kategorie umfassen, welche auch Informationen umfasst, die von niedriger Priorität aus Sicht der Verkehrssicherheit sind.

4. Informationssystem nach Anspruch 1, wobei das System einen ersten Sensor, der dazu ausgestaltet ist, um einen ersten Zeitpunkt zu detektieren, wenn der Fahrer das Gaspedal freigibt, und einen zweiten Sensor umfasst, der dazu ausgestaltet ist, um einen zweiten Zeitpunkt zu detektieren, wenn der Fahrer beginnt, das Bremspedal zu betätigen, dergestalt, dass das Zeitsignal Informationen über den Unterschied zwischen dem ersten und zweiten Zeitpunkt enthält.

5. Informationssystem nach einem der Ansprüche 1 bis 4, in welchem Informationen in der ersten Kategorie präsentiert werden, falls die gemessene Zeitperiode im Zeitsignal innerhalb eines ersten Bereichs von 20-50 ms liegt, und Informationen in der zweiten Kategorie präsentiert werden, falls die Zeitperiode innerhalb eines zweiten Bereichs von 20-200 ms liegt.

6. Informationssystem nach einem der Ansprüche 1 bis 3, in dem sich zumindest einer der Parameter auf die Beschleunigung des Fahrzeugs bezieht.

7. Informationssystem nach Anspruch 6, in dem die besagte Auswertevorrichtung dazu ausgestaltet ist, um ein Eingangssignal von einem Beschleunigungsmesser zu empfangen.

8. Informationssystem nach Anspruch 6 oder 7, in welchem Informationen in der ersten Kategorie präsentiert werden, falls der Absolutwert für die Beschleunigung innerhalb eines ersten Bereichs von 2-5 m/s² liegt, Informationen in der zweiten Kategorie präsentiert werden, falls der Wert innerhalb eines zweiten Bereichs von 1-2m/s² liegt, und Informationen in der dritten Kategorie präsentiert werden, falls der Wert kleiner als 1 m/s² liegt.

9. Informationssystem nach einem der vorhergehenden Ansprüche, in welchem die Verarbeitungsvorrichtung eine Speichereinheit umfasst, in der die Fahrerinformationen gespeichert werden.

## Revendications

1. Système d'information pour un véhicule comprenant un dispositif d'évaluation conçu pour évaluer la capacité d'un conducteur d'un véhicule à conduire le véhicule de manière anticipative, et pour générer un signal d'anticipation qui contient des informations à propos du degré d'anticipation du conducteur sur la base d'un ou plusieurs paramètres associés à son comportement, lequel système d'informations comprend en outre une unité de commande de présentation conçue pour influencer quelle catégorie d'information conducteur doit lui être présenté via un moyen de présentation en réponse audit signal d'anticipation, **caractérisé en ce qu'**au moins l'un desdits paramètres concerne l'utilisation par le conducteur des commandes d'accélération et de freinage du véhicule, telles que la pédale d'accélérateur et la pédale de frein, et ledit dispositif d'évaluation comprend un dispositif de traitement, une mémoire d'informations et un dispositif de mesure de temps qui est conçu pour mesurer au moins une période de temps associée à l'utilisation par le conducteur des commandes d'accélération et de freinage du véhicule et pour générer au moins un signal de temps sur la base de celle-ci, et **en ce que** ledit signal de temps est destiné à être envoyé au dispositif de traitement qui est conçu pour comparer la période de temps mesurée à une ou plusieurs valeurs seuil et pour générer ledit signal d'anticipation sur la base de la comparaison.

2. Système d'information selon la revendication 1, dans lequel lesdites informations conducteur comprennent au moins deux catégories d'information dont l'intérêt diffère du point de vue de la sécurité du trafic, à savoir une première catégorie ne comprenant que des informations ayant une priorité très élevée, et une deuxième catégorie qui comprend également des informations d'une priorité moyennement élevée du point de vue de la sécurité du trafic.

3. Système d'information selon la revendication 2, dans lequel lesdites informations conducteur comprennent une troisième catégorie qui comprend également des informations ayant une priorité basse du point de vue de la sécurité du trafic.

4. Système d'information selon la revendication 1, lequel système comprend un premier capteur conçu pour détecter un premier point dans le temps lorsque le conducteur relâche la pédale d'accélérateur, et un deuxième capteur conçu pour détecter un deuxième point dans le temps lorsque le conducteur commence à agir sur la pédale de frein, de façon que le signal de temps contiennent des informations concernant la différence entre le premier point dans le temps et le deuxième point dans le temps.

5. Système d'information selon l'une quelconque des revendications 1 à 4, dans lequel les informations de la première catégorie sont présentées si la période de temps mesurée contenue dans le signal de temps est comprise dans une première plage de 20-50 ms, et les informations de la deuxième catégorie sont présentées si la période de temps est comprise dans une deuxième plage de 50-200 ms.

6. Système d'information selon l'une quelconque des revendications 1 à 3, dans lequel au moins un paramètre concerne l'accélération du véhicule.

7. Système d'information selon la revendication 6, dans lequel ledit dispositif d'évaluation est conçu pour recevoir un signal d'entrée en provenance d'un accéléromètre.

8. Système d'information selon la revendication 6 ou 7, dans lequel les informations de la première catégorie sont présentées si la valeur absolue de l'accélération est comprise dans une première plage de 2-5 m/s², les informations de la deuxième catégorie sont présentées si la valeur est comprise dans une deuxième plage de 1-2 m/s², et les informations de la troisième catégorie sont présentées si la valeur est inférieure à 1 m/s².

9. Système d'information selon l'une quelconque des revendications précédentes, dans lequel le dispositif de traitement comprend une unité de mémoire dans laquelle sont stockées les informations conducteur.
